Europäisches Patentamt

(19) European Patent Office

Office européen des brevets

(11) Numéro de publication: **0 065 915
B1**

(12) **FASCICULE DE BREVET EUROPEEN**

(45) Date de publication du fascicule du brevet:
31.07.85

(51) Int. Cl.⁴: **F 16 N 7/34,** F 17 D 1/05

(21) Numéro de dépôt: **82400891.6**

(22) Date de dépôt: **14.05.82**

(54) Dispositif et produit pour éviter le givrage des outils pneumatiques, notamment ceux à percussion.

(30) Priorité: **15.05.81 FR 8109898**

(43) Date de publication de la demande:
**01.12.82 Bulletin 82/48**

(45) Mention de la délivrance du brevet:
**31.07.85 Bulletin 85/31**

(84) Etats contractants désignés:
**AT BE CH DE FR GB IT LI LU NL SE**

(56) Documents cités:
**FR - A - 1 234 635
FR - A - 2 122 871
GB - A - 960 225
GB - A - 2 032 808**

(73) Titulaire: **S.I.M.O. Société anonyme, 145, Route de Lyon, F-24000 Perigueux (FR)**

(72) Inventeur: **Moise, Roger, Cavagnac, F-46110 Vayrac (FR)**

(74) Mandataire: **Laget, Jean-Loup et al, Cabinet Pierre Loyer 18, Rue de Mogador, F-75009 Paris (FR)**

## Description

L'invention concerne un dispositif pour éviter le givrage des outils pneumatiques, notamment ceux à percussion tels que les brise-béton et les perforateurs et un produit pour éviter le givrage et qui est utilisé dans le dispositifs selon l'invention.

Les outils pneumatiques, notamment ceux à percussion employés sur les chantiers extérieurs ont souvent tendance à givrer; le phénomène est dû au refroidissement intense provoqué par la détente de l'air comprimé à l'échappement et au givrage corrélatif de l'eau contenue dans cet air. De plus, depuis quelque temps, les constructeurs de tels outils ont l'obligation d'en réduire le bruit énorme et dangereux pour l'oreille de l'utilisateur et des gens se trouvant dans l'environnement.

La solution généralement adoptée consiste en un amortisseur de bruit, formé d'une enceinte presque close installée autour du cylindre, avec ou sans chicanes, et dont le volume est suffisant pour recevoir l'air d'échappement de chaque cycle afin qu'il se détende le plus possible, qu'il sorte à une vitesse inférieure à celle du son et sans pulsation, par un ou plusieurs petits orifices vers l'atmosphère. Le niveau sonore devient acceptable mais le givrage dont il est question est décuplé et, selon les conditions atmosphériques, la glace arrive en quelques minutes à obstruer les conduits d'évacuation provoquant le blocage de l'outil.

De nombreuses heures de travail sont perdues du fait de l'attente périodique des dégivrages. D'autre part, on peut constater que malgré les réglements les ouvriers enlèvent souvent l'amortisseur de bruit pour pouvoir exécuter leur travail, ce qui fait que l'on entend encore trop les marteaux piqueurs dans les rues.

Comme déjà expliqué, c'est l'eau toujours plus ou moins présente dans l'air comprimé, qui se transforme en givre et en glace sous l'influence du froid intense provoqué par la détente de l'air à l'échappement. Ce phénomène est encore amplifié du fait que la détente se produit dans les chicanes étroites de l'amortisseur souvent exécuté en caoutchouc ou matière plastique formant calorifuge.

Un modèle de brise-béton possède un type d'amortisseur de bruit qui par sa conception supprime les chicanes étroites et les petits orifices d'échappement. L'échappement se faisant par une partie annulaire étroite située à la base de l'amortisseur entre sa paroi interne et la paroi externe du cylindre sur lequel il se déplace axialement faisant office de grattoir à givre; c'est une solution mécanique qui ne semble pas résoudre totalement le problème.

La solution idéale est de déshydrater l'air comprimé. Les techniques existent, les matériels aussi.

On obtient ce résultat soit en faisant passer l'air sur un produit absorbant l'eau et régénérable par réchauffement, soit mieux en faisant passer l'air sur un évaporateur frigorifique. Exemple: en faisant passer de l'air à 35°C, comprimé à 10 bars sur évaporateur à 2°C on aura sensiblement enlevé par condensation 97% de l'eau contenue et le résidu de vapeur d'eau sera inférieur à 0,50 gr par par $m^3$ pour une température de sortie de 16"C, soit une humidité relative de 3,6% environ.

Tout cela est parfait pour un poste de séchage d'air en usine. Mais, pour les compresseurs de chantier dont les débits peuvent atteindre 600 $m^3$/H et qui travaillent souvent par une humidité relative de 90 à 95%, le poids (500 Kg env.) d'un tel matériel de séchage, et les coûts, tant à l'achat qu'en consommation d'énergie électrique, sont prohibitifs. De plus, ces appareils sont trop fragiles pour être utilisés sur les chantiers où d'ailleurs souvent le courant électrique manque; sans parler des problèmes de branchement de compteur et de facturation quand il est mis à disposition.

Dans d'autres solutions plus particulièrement adaptées aux compresseurs de chantier, il existe des séparateurs d'eau plus ou moins sophistiqués se plaçant soit directement sur le châssis du compresseur soit sur le flexible de l'alimentation de l'outil. Ces séparateurs sont de deux types. D'abord, les séparateurs d'eau fermés, dans lesquels l'air comprimé chargé d'eau est centrifugé et passe par des chicanes en abandonnant une partie de l'eau condensée qui s'accumule dans le bas de l'appareil d'où elle est évacuée à l'extérieur, soit manuellement et périodiquement par un robinet, soit automatiquement par purgeur.

Ensuite, les séparateurs d'eau ouverts à l'atmosphère dans lesquels l'air comprimé chargé d'eau est également centrifugé et abandonne une partie de l'eau condensée sur les parois de l'appareil, d'où elle est entraînée par une quantité importante d'air comprimé qui s'échappe en permanence par un petit orifice vers l'atmosphère.

Ces deux types de séparateurs se sont révélés insuffisamment efficaces et sont en général abandonnés; en outre, les modèles de séparateurs d'eau dits ouverts ont l'inconvénient, par rejet permanent à l'atmosphère, de consommer autant d'air comprimé que l'outil lui-même, d'où une marche continue du compresseur et dépense accrue.

Reste, pour compléter cet exposé sur la situation actuelle dans cette technique, à parler des dispositifs autonomes, c'est-à-dire montés directement sur le brise-béton.

Pour la plupart il s'agit simplement du système de lubrification de l'outil qui consiste soit en une petite cartouche plastique jetable, soit en un petit réservoir d'huile incorporé, ou venu de fonderie, généralement avec la poignée de l'outil.

Il existe aussi des petits lubrificateurs séparés que l'on place directement entre l'outil et le flexible d'arrivée d'air comprimé. Ils sont surtout des-

tinés à l'outillage pneumatique en atelier (meules, perceuses, visseuses, clés à chocs, etc) mais ne sont pratiquement pas utilisés sur les chantiers et surtout sur les brise-béton parce que trop fragiles et gênants pour la manoeuvre de l'outil.

Ces trois derniers types de lubrificateurs autonomes ont tous en tant que lubrificateurs le même défaut: la contenance de quelques cm³ d'huile est insuffisante et l'on doit faire le plein où changer de cartouche plusieurs fois par poste de travail; c'est contraignant, il y a perte de temps et avec la poussière ou la boue sur un chantier on risque d'introduire des saletés dans le lubrifiant.

Dans tous ces dispositifs autonomes la solution employée ou simplement préconisée pour éviter le givrage du brise-béton consiste à ajouter de l'anti-givre à l'huile de lubrification.

Le résultat est médiocre et les contraintes dont on a parlé sont décuplées (changements de cartouche, ou pleins de mélange, plus fréquents, car il faut davantage d'anti-givre que d'huile.) Une autre cause de la médiocrité de ces systèmes autonomes est la suivante: l'injection du mélange d'huile et d'anti-givre se fait au niveau du cylindre de l'outil, généralement avec une pastille micro-poreuse plus ou moins comprimée, ou une vis à filets tronqués formant un labyrinthe plus ou moins long; c'est très bien pour la lubrification, mais insuffisant pour que l'eau contenue dans l'air comprimé soit dopée et rendue incongelable pour supporter le froid intense lors de la détente de cet air à chaque échappement (1000 fois par minute environ).

La présente invention vise à éliminer tous les défauts des solutions actuelles, son but étant ainsi d'éviter la formation de givre ou de glace lors de l'échappement de l'air comprimé à l'atmosphère sans que cela entraîne d'autres inconvénients.

L'invention a pour objet un dispositif pour éviter le givrage des outils pneumatiques, notamment ceux à percussion tels que les brise-béton et les perforateurs, caractérisé en ce qu'il comporte au moins un premier réservoir de produit susceptible d'éviter le givrage; une chambre d'atomisation dudit produit; et sur la canalisation d'amenée de l'air comprimé à l'outil, une tuyère de type Venturi, dont le passage étroit communique avec ladite chambre d'atomisation par un orifice.

Selon des réalisations particulières de l'invention:

— ledit premier réservoir communique avec ladite chambre d'atomisation par un tube plongeur, une mini-valve pressostatique et un gicleur;
— un deuxième réservoir est prévu, contenant une huile de lubrification, et communiquant avec la chambre d'atomisation par l'intermédiaire d'un tube plongeur, d'une mini-valve pressostatique et d'un gicleur;
— la chambre d'atomisation est positionnée axialement au-dessus des deux réservoirs, son fond étant formé par la partie supérieure commune aux deux réservoirs;
— la partie supérieure de la chambre d'atomisation est traversée par un tube servant de logement à ladite tuyère, ledit orifice de communication entre la chambre et la tuyère étant prévu sur le tube;
— des robinets à trois voies sont susceptibles de relier les deux réservoirs soit à l'atmosphère soit, par l'intermédiaire d'un petit tube, à la canalisation d'air comprimé en amont de la tuyère;
— la tuyère est amovible dans le tube lui servant de logement, des joints toriques assurant son maintien de manière étanche.

L'invention a également pour objet un produit pour éviter le givrage des outils pneumatiques et qui est utilisé dans le dispositif selon l'invention, caractérisé en ce qu'il comprend:
deux alcools liquides comme agents abaissant le point de congélation de l'eau; un hydroxyde de métaux alcalins comme agent de rupture des ponts d'hydrogène entre molécules d'eau; et un produit anti-mousse.

Selon des réalisations particulières de l'invention:

— les alcools liquides sont un monoéthylène-glycol contenant des produits inhibiteurs de corrosion n'attaquant pas le caoutchouc, et un alcool méthylique;
— l'hydroxyde de métaux alcalins est un hydroxyde de sodium aqueux à 50%.

Parmi les avantages remarquables du dispositif selon l'invention, on peut noter les suivants:

— il peut être installé directement sur le compresseur ou à un endroit quelconque sur la conduite d'air comprimé alimentant le ou les appareils pneumatiques, notamment ceux à percussion tels que brise-béton ou perforateur;
— il est relativement peu onéreux, peu encombrant et très robuste;
— il est valable pour tous les modèles de brise-béton ou perforateur ou autres outils, qu'ils soient des modèles anciens ou modernes, munis ou non d'amortisseurs de n'importe quel type, munis ou non de système de lubrification quels qu'ils soient;
— il peut assurer aussi la lubrification, seule ou en parallèle avec le système atomiseur de contamination de l'eau condensée et, ce pour tous types d'outils pneumatiques notamment à percussion, tels que brise-béton et perforateur, déjà munis ou non d'un système autonome de lubrification;
— le débit de cette lubrification s'adapte à tous les types d'outils;
— le système de lubrification peut ne pas être utilisé si le graissage autonome de l'outil donne déjà satisfaction ou la garantie du constructeur impose son emploi;
— il est possible sans débrancher les flexibles d'arrêter le système atomiseur de contamination, si les conditions atmosphériques du moment font qu'il ne s'avère pas nécessaire, d'où économie de produit;
— pendant cet arrêt le système de lubrification continue d'assurer son office si le choix en a été décidé;
— il ne consomme les produits contaminants et l'huile de lubrification que pendant la marche effective de l'outil; celà du fait que le système d'atomisation des produits et de l'huile est commandé automatiquement par les variations de la pression dans la chambre d'atomisation liées au débit d'air dans le flexible d'alimentation lors de la mise en marche ou de l'arrêt du ou des outils;
— il n'est nécessaire de refaire les pleins qu'une seule fois par journée de travail, en alimentant de un à trois brise-béton 4.

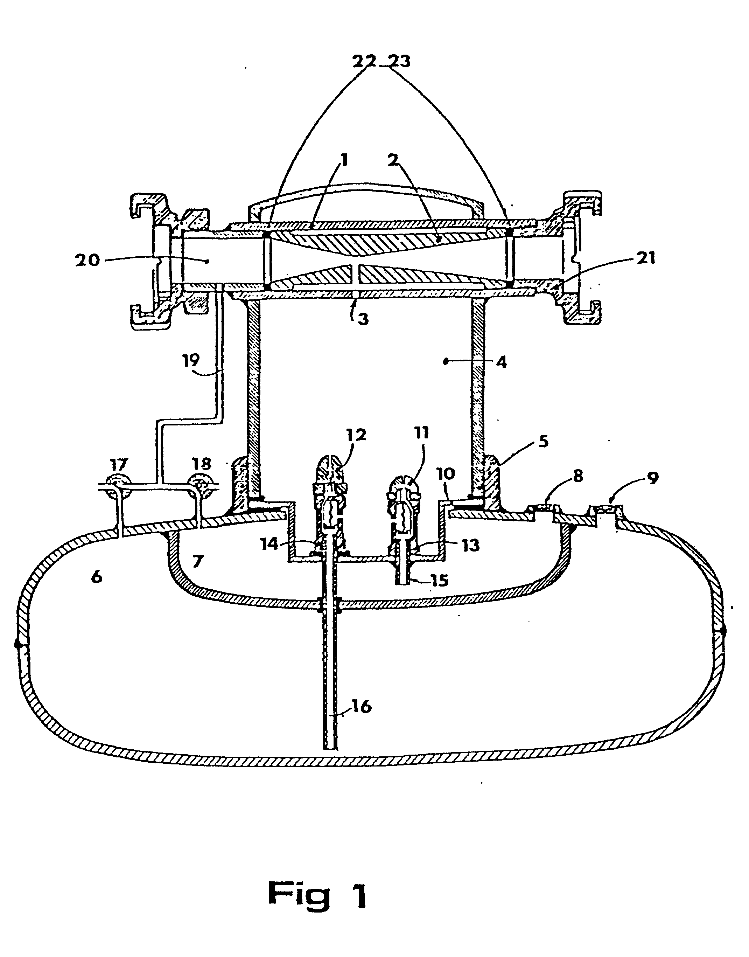

Une forme d'exécution de l'invention est décrite ci-après à à titre indicatif et nullement limitatif. Elle sera mieux comprise à l'aide de la description qui suit en référence à l'unique figure du dessin schématique annexé représentant une coupe selon le diamètre de l'appareil dans le sens longitudinal de la tuyère.

Le dispositif comprend au moins un tube I portant une tuyère 2, traversant une chambre d'atomisation, et communiquant avec elle par au moins un orifice périphérique 3. Cette chambre comporte à sa base des moyens de fixation amovible 5 sur un réservoir 6, lequel comprend à la partie haute intérieure et axialement un second réservoir plus petit 7 leur paroi supérieure étant commune. Chacun de ces réservoirs possède un bouchon de remplissage étanche à la pression 8 et 9.

Une partie de la paroi supérieure commune à ces deux réservoirs forme le fond inférieur 10 de la chambre d'atomisation 4. Sur ce fond, après perçage, est montée une platine supportant deux gicleurs 11 et 12 de débits différents, pouvant atomiser respectivement l'huile de lubrification et le produit pour éviter le givrage dans la chambre 4, ensemble ou séparément. En outre ces gicleurs sont précédés de deux mini-vannes pressostatiques 13 et 14 dont l'ouverture est commandée par la mise en dépression de la chambre d'atomisation 4 par la tuyère 2.

Ces mini-vannes pressostatiques sont placées, l'une sur le tube plongeur 15 qui alimente en huile de lubrification le gicleur 11 de faible débit à partir du petit réservoir 7, l'autre sur le tube plongeur 16 qui alimente en produit contaminant pour éviter le givrage le gicleur 12 à plus grand débit, à partir du grand réservoir 6, après avoir traversé le fond du petit réservoir de manière étanche.

La partie supérieure des réservoirs 6 et 7 communique, par l'intermédiaire de deux petits robinets à trois voies 17 et 18 et d'un petit tube 19 avec l'élément 20 collecteur d'arrivée d'air du compresseur (pression 7 kg manométrique) en amont de la tuyère 2. Les robinets à trois voies 17 et 18 peuvent également relier directement avec l'atmosphère les réservoirs 6 et 7. C'est cette pression d'air de 7 kg appliquée dans la partie supérieure des réservoirs 6 et 7 qui permet l'atomisation dans la chambre 4 lorsque celle-ci est mise en dépression par la tuyère 2, faisant s'ouvrir les mini-vannes pressostatiques 13 et 14.

On voit que suivant la position des deux robinets à trois voies 17 et 18 on peut mettre en pression (7 kg) l'un ou l'autre des réservoirs 6 et 7 ou les deux à la fois, et par conséquent atomiser l'un ou l'autre des produits ou les deux à la fois.

On notera que la tuyère 2 est interchangeable et qu'elle est maintenue dans le tube porte-tuyère 1 de manière étanche (joints toriques 22 et 23 en amont et aval) par le serrage du raccord 21 servant de prise d'alimentation d'air au flexible des outils.

La zone de dépression de cette tuyère est en communication avec le ou les orifices périphériques 3 du tube porte-tuyère et donc avec la chambre d'atomisation 4. Les tuyères sont interchangeables car leur débit doit être calculé en fonction de la consommation de l'outil en assurant une détente de l'air comprimé de 7 kg de pression amont (compresseur) à 6 Kg manométriques, pression d'utilisation des outils, afin d'obtenir une bonne aspiration dans la chambre d'atomisation lors de la marche de l'outil.

Ces tuyères peuvent être fabriquées en métal ou en matière plastique, voire en verre, par usinage classique ou par moulage, sans sortir du cadre de l'invention.

Quand ce dispositif est employé sur les chantiers de travaux publics, le flexible venant du compresseur est raccordé au collecteur 20, et le flexible alimentant le brise-béton au raccord de sortie 21. Pendant l'arrêt du brise-béton, il n'y a aucun débit d'air comprimé, la pression est partout de 7 Kg en amont de la tuyère 2, et, suivant la position des robinets à trois voies 17 et 18 dans le ou les réservoirs 6 et 7, en aval de la tuyère, dans la tuyère elle-même, et donc dans la chambre d'atomisation 4. Les mini-vannes pressostatiques 13 et 14 d'alimentation des gicleurs 11 et 12 sont fermées.

Quand on met le brise-béton en action, il consomme de l'air comprimé, par exemple 100 m³/H à 6 Kg, détente obtenue par la tuyère à ce débit.

La tuyère aspire dans le tube porte-tuyère 1 et donc dans la chambre 4 qui se trouve alors en dépression, les mini-vannes pressostatiques 13 et 14 s'ouvrent, l'alimentation des gicleurs 11 et 12 peut se faire sous pression de 7 kg si le ou les robinets à trois 17 et 18 mettent le ou les réservoirs en communication avec la pression en amont de la tuyère (collecteur 20).

En ce qui concerne le produit de contamination pour empêcher le givrage le but recherché est double:

a) doper l'eau en phase vapeur ou condensée contenue dans l'air comprimé alimentant les outils pneumatiques à percussion de manière à abaisser son point de congélation pour éviter le givrage et le gel provoqué par le froid intense dû à la détente de l'air;

b) éviter également la formation de givre par l'air atmosphérique environnant qui se condense sur les parties extérieures froides des outils.

Pour résoudre le premier problème il faut un antigel très hydrophile contenant des inhibiteurs de corrosion et un produit anti-mousse; de plus, il faut que sa viscosité permette une atomisation (50 microns) avec la pression dont on dispose.

Pour résoudre le second problème, il faut, autant que faire se peut, éviter la cristallisation de l'eau qui se condense sur les parties extérieures froides des outils. A ce sujet, on a remarqué que la cristallisation de l'eau (formation de givre et de glace) est surtout provoquée par la formation de ponts d'hydrogène par lesquels les atomes d'oxygène de deux molécules voisines sont liées et qui déjà dans l'eau sont associées dans les molécules. On peut considérer que dans une telle structure chaque atome d'oxygène est entouré de quatre autres atomes d'oxygène en tétraèdre et que sur chaque ligne de liaison de 2 atomes d'oxygène se trouve un atome d'hydrogène formant un pont d'hydrogène. Un atome d'oxygène n'est donc pas seulement lié à deux atomes d'hydrogène par covalence mais également par les ponts d'hydrogène à deux autres d'oxygène.

On a récemment remarqué que les hydroxydes de métaux alcalins à très faibles doses perturbent la formation de ces ponts d'hydrogène et donc la formation de givre.

Après plusieurs essais et dosages de différents alcools liquides abaissant le point de congélation et pour obtenir un produit finement atomisable ayant donc une grande surface de contact avec les vapeurs d'eau et l'eau condensée contenue dans l'air à doper, on a retenu: l'éthylène-glycol et l'alcool méthylique.

L'éthylène-glycol préféré est le monoéthylène-glycol que l'on trouve dans le commerce, comportant déjà des inhibiteurs de corrosion tels que nitrite, tétraborate et benzoate de sodium.

Parmi les agents anti-mousse polyglycoliques compatibles que l'on prépare généralement en ajoutant de l'oxyde d'éthylène à du polypropylène-glycol on a obtenu de bons résultats avec le »Plutonic L 61«, marque déposée de la Wyandotte Chemical Company.

Enfin l'hydroxyde de métaux alcalins préféré est l'hydroxyde de sodium aqueux à 50% qui, outre les effets mentionnés, a l'avantage quand il est combiné avec le tétraborate de sodium de transformer une partie des ions tétraborates en ions métaborates.

Un exemple, nullement limitatif de l'invention qui a donné de bons résultats est décrit ci-dessous:

On a mélangé 600,0 g de monoéthylène-glycol du commerce comportant déjà des inhibiteurs de corrosion, notamment les tétraborate et benzoate de sodium, 387,0 g d'alcool méthylique, puis on a ajouté 3,0 g d'hydroxyde de sodium aqueux à 50% et enfin 10,0 g de »Plutonic L 61«.

Avec le dispositif selon l'invention, les liquides des réservoirs 6 et 7 sont atomisés au niveau des gicleurs 11 et 12 et un brouillard se trouve diffus dans la chambre 4. Par suite de la dépression créée en 3 par la tuyère, les fines gouttelettes de ce brouillard sont aspirées au niveau du passage étroit du Venturi, où existe un débit d'air à grande vitesse. Les gouttelettes de brouillard y sont encore divisées et sont ensuite entraînées vers le brise-béton. Elles jouent le rôle de contaminant pour l'eau qui se trouve dans l'air comprimé utilisé pour la commande du brise-béton, et en abaissant le point de congélation de cette eau, elles évitent le givrage à l'échappement et au niveau de l'amortisseur de broit.

Les gouttelettes d'huile de lubrification qui se trouvent le cas échéant entraînées par l'air comprimé vers l'outil assurent sa lubrification permanente.

## Revendications

1. Dispositif pour éviter le givrage des outils pneumatiques, notamment ceux à percussion tels que les brise-béton et les perforateurs, caractérisé en ce qu'il comporte au moins un premier réservoir (6) de produit susceptible d'éviter le givrage; une chambre (4) d'atomisation dudit produit; et sur la canalisation d'amenée de l'air comprimé à l'outil une tuyère (2) de type venturi, dont le passage étroit communique avec ladite chambre d'atomisation par un orifice (3).

2. Dispositif selon la revendication 1, caractérisé en ce que ledit premier réservoir (6) communique avec ladite chambre (4) d'atomisation par un tube plongeur (16), une mini-vanne pressostatique (14) et un gicleur (12).

3. Dispositif selon la revendication 1, caractérisé en ce qu'un deuxième réservoir (7) est prévu, contenant une huile de lubrification, et communiquant avec la chambre (4) d'atomisation par l'intermédiaire d'un tube plongeur (15) d'une mini-vanne pressostatique (13) et d'un gicleur (11).

4. Dispositif selon la revendication 3, caractérisé en ce que la chambre (4) d'atomisation est positionnée axialement au-dessus des deux réservoirs (6, 7), son fond étant formé par la partie supérieure commune aux deux réservoirs.

5. Dispositif selon la revendication 4, caractérisé en ce que la partie supérieure de la chambre (4) d'atomisation est traversée par un tube (1) servant de logement à ladite tuyère (2), ledit orifice (3) de communication entre la chambre et la tuyère étant prévu sur le tube (1).

6. Dispositif selon la revendication 3, caractérisé en ce que des robinets, à trois voies (17, 18) sont susceptibles de relier les deux réservoirs (6, 7) soit à l'atmosphère, soit par l'intermédiaire d'un petit tube (19), à la canalisation d'air comprimé en amont de la tuyère (2).

7. Dispositif selon la revendication 5, caractérisé en ce que la tuyère (2) est amovible dans le tube (1) lui servant de logement, des joints toriques (22, 23) assurant son maintien de manière étanche.

8. Produit pour éviter le givrage, destiné à être placé dans le premier réservoir (6) du dispositif selon l'une des revendications 1 à 7, caractérisé en ce qu'il comprend; deux alcools liquides comme agents abaissant le point de congélation de l'eau; un hydroxyde de métaux alcalins comme agent de rupture des ponts d'hydrogène entre molécules d'eau; et un produit antimousse.

9. Produit selon la revendication 8, caractérisé en ce que les alcools liquides sont un monoéthylène-glycol contenant des produits inhibiteurs de corrosion n'attaquant pas le caoutchouc, et un alcool méthylique.

10. Produit selon la revendication 8, caractérisé en ce que l'hydroxyde de métaux alcalins est un hydroxyde de sodium aqueux à 50%.

**Patentansprüche**

1. Einrichtung zur Verhinderung von Eisbildung in pneumatischen Geräten, insbesondere Schlaggeräten, wie Betonbrecher und Bohrhämmer, dadurch gekennzeichnet, daß sie mindestens einen Vorratsbehälter (6) für das die Eisbildung verhindernde Produkt, eine Zerstäubungskammer (4) für dieses Produkt und eine Venturidüse (2) auf der Zuleitung für die Druckluft zu dem Gerät, deren enger Durchlaß über eine Öffnung (3) mit der Zerstäubungskammer in Verbindung steht, umfaßt.

2. Einrichtung nach Patentanspruch 1, dadurch gekennzeichnet, daß der erste Vorratsbehälter (6) mit der Zerstäubungskammer (4) über ein Tauchrohr (16), ein druckempfindliches Kleinventil (14) und eine Zerstäuberdüse (12) in Verbindung steht.

3. Einrichtung nach Patentanspruch 1, dadurch gekennzeichnet, daß ein zweiter, Schmieröl beinhaltender Vorratsbehälter (7) vorgesehen ist, der mit der Zerstäubungskammer (4) über ein Tauchrohr (15), ein druckempfindliches Kleinventil (13) und eine Zerstäuberdüse (11) in Verbindung steht.

4. Einrichtung nach Patentanspruch 3, dadurch gekennzeichnet, daß die Zerstäubungskammer (4) axial über den beiden Vorratsbehältern (6, 7) angeordnet ist, wobei ihr Boden von dem den beiden Vorratsbehältern gemeinsamen oberen Teil gebildet wird.

5. Einrichtung nach Patentanspruch 4, dadurch gekennzeichnet, daß der obere Teil der Zerstäubungskammer (4) von einem der Düse (2) als Lager dienenden Rohr (1) durchquert wird, wobei die Verbindungsöffnung (3) zwischen der Kammer und der Düse in dem Rohr (1) vorgesehen ist.

6. Einrichtung nach Patentanspruch 3, dadurch gekennzeichnet, daß über Dreiweghähne (17, 18) die beiden Vorratsbehälter (6, 7) entweder mit der Atmosphäre oder durch Zwischenschaltung eines kleinen Rohres (19) mit der von der Düse (2) zuströmseitigen Druckluftleitung verbindbar sind.

7. Einrichtung nach Patentanspruch 5, dadurch gekennzeichnet, daß die Düse (2) aus dem ihr als Lager dienenden Rohr (1) herausnehmbar ist, wobei Runddichtringe (22, 23) ihre dichte Halterung gewährleistet.

8. Produkt zur Verhinderung von Eisbildung, das dazu bestimmt ist, in den ersten Vorratsbehältern (6) der Einrichtung gemäß einem der Patentansprüche 1 bis 7 gefüllt zu werden, dadurch gekennzeichnet, daß es zwei flüssige Alkohole, die als Mittel zum Absenken des Gefrierpunktes des Wassers dienen, ein Alkalimetall-Hydroxid, das als Mittel zum Durchbrechen der Wasserstoffbrücken zwischen Wassermolekülen dient, und ein Antischäummittel enthält.

9. Produkt nach Patentanspruch 8, dadurch gekennzeichnet, daß die flüssigen Alkohole ein Monoäthylenglykol, das Mittel zur Korrosionshemmung enthält, die Gummi nicht angreifen, und ein Methylalkohol sind.

10. Produkt nach Patentanspruch 8, dadurch gekennzeichnet, daß das Alkalimetall-Hydroxid ein zu 50% wasserhältiges Natriumhydroxid ist.

**Claims**

1. A device for avoiding the icing of pneumatic tools, notably percussion tools such as jack hammers and boring machines, characterized in that it comprises at least a first tank (6) for the product adapted for avoiding the icing; an atomizing chamber (4) of said product, and on the compressed air input channel to the tool a venturi-type nozzle (2) the narrow passage of which is in communication with said atomizing chamber via an opening (3).

2. A device according to claim 1, wherein said first tank (6) communication with said atomizing chamber (4) via a plunger tube (16), a pressure-static minivalve (14) and a jet (12).

3. A device according to claim 1, wherein a second tank (7) is provided, containing a lubricating oil, and communating with the atomizing chamber (4) via a plunger tube (15), a pressure-static minivalve (13) and a jet (11).

4. A device according to claim 3, wherein the atomizing chamber (4) is positioned axially above the two tanks (6, 7), its bottom being formed by the common upper portion of the two tanks.

5. A device according to claim 4, wherein a tube (1) used as housing for said nozzle (2) is extending through the upper portion of the atomizing chamber (4), whereby said communication opening (3) between the chamber and the nozzle is provided on the tube (1).

6. A device according to claim 3, wherein three-way cocks (17, 18) are adapted for connecting the two tanks (6, 7) either to the atmosphere, or via a small tube (19) to the compressed air channel upstream of nozzle (2).

7. A device according to claim 5, wherein nozzle (2) is movable in tube (1) housing it, O-rings (22, 23) providing its tightness.

8. A product for avoiding icing, intended for being placed in the first tank (6) of the device according to one of claims 1 to 7, characterized in that it comprises: two liquid alcohols as agents for lowering the water freezing point; a hydroxide of alkaline metals as breaking agents for the hydrogen bridges between the water molecules; and an anti-foam product.

9. A product according to claim 8, wherein the liquid alcohols are a monoethylene-glycol containing corrosion inhibition products which do not attack rubber, and a methyl alcohol.

10. A product according to claim 8, wherein the hydroxide of alkaline metals is a 50% aqueous sodium hydroxide.

# Fig 1